Europäisches Patentamt

European Patent Office

Office européen des brevets

(11) Veröffentlichungsnummer: **0 400 167 B1**

## (12) EUROPÄISCHE PATENTSCHRIFT

(45) Veröffentlichungstag der Patentschrift: **26.10.94**

(51) Int. Cl.5: **G01F 23/24**

(21) Anmeldenummer: **89109720.6**

(22) Anmeldetag: **30.05.89**

(54) **Niveaufühler mit hohem Signalhub für Flüssigkeiten, insbesondere chemisch aggressive Flüssigkeiten.**

(43) Veröffentlichungstag der Anmeldung:
**05.12.90 Patentblatt 90/49**

(45) Bekanntmachung des Hinweises auf die
Patenterteilung:
**26.10.94 Patentblatt 94/43**

(84) Benannte Vertragsstaaten:
**AT BE CH DE ES FR GB IT LI LU NL SE**

(56) Entgegenhaltungen:
**EP-A- 061 550
DE-C- 2 429 483
US-A- 3 863 210
US-A- 4 276 536**

**SIEMENS-ZEITSCHRIFT Heft 2, Februar 1965,
Seiten 138-145, Erlangen, DE; W. CIRKLER et
al.: "Ein neuer Kaltleitertyp - Eigenschaften
und Verwendung als Flüssigkeitsstandfühler"**

(73) Patentinhaber: **SIEMENS AKTIENGESELL-
SCHAFT
Wittelsbacherplatz 2
D-80333 München (DE)**

(72) Erfinder: **Fellner, Siegfried, Dipl.-Ing.
Unterpreitenegg 71
A-9451 Preitenegg (AT)**
Erfinder: **Bisail, Gerhard
Frauentalerstrasse 9
A-8530 Deutschlandsberg (AT)**

## Beschreibung

Die Erfindung betrifft ein Verfahren zur Herstellung eines Niveaufühlers mit hohem Signalhub für Flüssigkeiten, insbesondere chemisch aggressive Flüssigkeiten, mit einem mit Stromzuführungen versehenen, in einem Behälter aus Glas befindlichen Kaltleiter (PTC-Widerstand) als Fühlerelement.

Die Verwendung von Kaltleitern für die Niveau-Kontrolle eines Flüssigkeitsstandes ist bekannt. Eine spezielle Bauform eines Niveaufühlers mit den oben genannten Merkmalen ist in der Siemens-Zeitschrift, Heft 2, Febr. 1965, Seiten 138 - 145 beschrieben und in seiner Funktionsweise erläutert.

Kaltleiter (PTC-Widerstände) sind temperaturabhängige elektrische Widerstände (Thermistoren) aus halbleitender ferroelektrischer Keramik. Kennzeichnend für sie ist der steile Anstieg des spezifischen Widerstandes im Bereich der Curietemperatur des ferroelektrischen Ausgangsstoffes. Für die Anwendung wichtig ist der Beginn des beinahe sprunghaften Widerstandsanstiegs von mehreren Zehnerpotenzen, der durch die Bezugstemperatur, die ungefähr der ferroelektrischen Curietemperatur entspricht, charakterisiert wird. Zur Zeit stehen Kaltleitertypen mit Bezugstemperaturen bis ca. + 250 ° C zur Verfügung. Unterhalb der Curietemperatur sind die Kaltleiter niederohmig.

Die Temperatur eines Kaltleiters wird einerseits durch die Temperatur seiner Umgebung, andererseits durch die im Kaltleiter selbst entwickelte Joulesche Wärme bestimmt. Welcher dieser beiden Anteile in einem speziellen Anwendungsfall dominiert, ist von der elektrischen Belastung und den Wärmeableitungsverhältnissen abhängig. Liegt am Kaltleiter eine Spannung U und durchfließt ihn ein Strom I, so wird in ihm eine Leistung P = U I umgesetzt, die sich in Wärmeentwicklung äußert. Die Temperatur des Kaltleiters $T_K$ steigt nun so lange an, bis ein Zustand erreicht ist, in dem in gleicher Zeit ebenso viel Wärme erzeugt wie an die Umgebung abgeführt wird. Der Kaltleiter befindet sich nun im thermischen Gleichgewicht mit seiner Umgebung. Es gilt dann die Beziehung

$$U \quad I = \frac{T_K - T_U}{W}$$

worin $T_U$ die Umgebungstemperatur und W den Wärmewiderstand bedeuten.

Beim Einsatz als Niveaufühler wird der Kaltleiter mit einer festen Spannung betrieben, die gerade ausreicht, um ihn über die Bezugstemperatur aufzuheizen. Bei konstanter Spannung ist der Strom durch den Kaltleiter ein Maß für die vorliegenden Wärmeleitverhältnisse. Ändert sich mit diesen der Wärmewiderstand W, so treten als Folge davon im Kaltleiter Leistungsänderungen und damit Stromänderungen ein, die für eine Signalwirkung ausgenutzt werden können. Beim Eintauchen eines Kaltleiters in eine Flüssigkeit steigt dessen Stromaufnahme, da durch die erhöhte Kühlwirkung der Flüssigkeit der Kaltleiter seinen Widerstand verringert. Nach diesem Prinzip lassen sich Niveaufühler dimensionieren, die Niveauzustände wie Flüssigkeit vorhanden/nicht vorhanden, signalisieren können.

Der Wärmewiderstand W setzt sich näherungsweise additiv aus einem für das umgebende Medium und einem für den Kaltleiter und seine Umhüllung spezifischen Anteil zusammen. Ein optimales Signalverhältnis erhält man folglich nach obiger Formel im Falle einer niedrigen Umgebungstemperatur, einer hohen Bezugstemperatur und einer guten thermischen Koppelung des Kaltleiters mit der Umgebung. Leider verbietet sich in vielen Anwendungsfällen der Einsatz von Kaltleitern mit hoher Bezugstemperatur. Es erhöht sich nämlich mit der Bezugstemperatur auch die Leistungsaufnahme im eingetauchten Zustand, was zu unerwünschten Stromspitzen führt. Vor allem aber sind viele Umgebungsmedien gegenüber derartig hohen Temperaturen chemisch nicht stabil. Letztlich schmelzen bei Bezugstemperaturen über 200 ° C auch die Lötverbindungen zwischen Stromzuführungsdrähten und den Kaltleitern.

Bei dem bekannten Niveaufühler, bei dem der Kaltleiter in ein Glasgehäuse eingebaut ist, wobei sich zwischen dem Kaltleiter und dem Glasgehäuse eine Luftschicht befindet, ergibt sich ein ausreichendes Signalverhältnis nur bei einer Flüssigkeitstemperatur bis zu etwa 50 ° C. Zwar sind aus dem Stand der Technik, beispielsweise der DE PS 32 32 333 auch Niveaufühler für höhere Flüssigkeitstemperaturen bekannt, jedoch sind diese konstruktiv völlig anders und wesentlich aufwendiger aufgebaut als die hier in Rede stehenden besonders einfachen glasgekapselten Niveaufühler.

Bei dem bekannten, in ein Glasgehäuse eingefügten Niveaufühler werden die beiden Forderungen nach dichtem Einbau des Kaltleiters und guter thermischer Koppelung mit der Umgebung im wesentlichen getrennt voneinander gelöst: Das Glasgehäuse schützt den Kaltleiter, während die Wärmeauskoppelung hauptsächlich über die Stromzuführungen geschieht. Ein erster Stromzuführungsdraht hat einen flachen Kopf, auf den der nur ca. 1,3 mm breite und 0,5 mm dicke Miniaturkaltleiter mit Hilfe eines an einen zweiten Stromzuführungsdraht befestigten Federbügels aufgedrückt wird. Die Kaltleiterscheibe selbst hat eine festhaftende sperrfrei aufgebrachte Metallbelegung, die außer dem elektrischen Kontakt einen guten Wärmekontakt zu dem flachen Kopf des ersten Stromzuführungsdrahtes bewirkt. Wie bereits erwähnt, hat die Praxis jedoch gezeigt, daß eine thermische Kopplung nur mit Hilfe der Stromzuführungsdrähte bei Umgebungstemperaturen von mehr als 50°C kein ausreichendes Signalverhältnis gewährleistet.

Der vorliegenden Erfindung liegt daher die Aufgabe zugrunde, ein Verfahren zur Herstellung eines Niveaufühlers zur Niveau-Kontrolle eines Flüssigkeitsstandes mit dem eingangs angegebenen besonders einfachen Aufbau zu schaffen, der eine höchstmögliche Auskoppelung der vom Kaltleiter erzeugten Wärme gewährleistet und durch den dadurch erhöhten Signalhub auch die Verwendung bei flüssigen Medien mit höherer Temperatur als bisher ermöglicht.

Zur Lösung dieser Aufgabe dient das Verfahren gemäß Anspruch 1.

Der Erfindung liegt u.a. die Erkenntnis zugrunde, daß man eine zusätzliche Wärmeauskoppelung des Kaltleiters erreichen kann, indem man ihn in Glas einschmilzt, so daß ohne eine wärmedämmende Luftschicht die Wärme unmittelbar vom Kaltleiter über das Glasgehäuse an das umgebende Medium weitergeleitet wird. Der Vorteil einer verbesserten Signalhöhe läßt sich aber nur erzielen, wenn die Kontaktierung der Kaltleiter mit den Stromzuführungen hinsichtlich des Einschmelzens im Glas einerseits temperaturbeständig und andererseits kaltleiterverträglich, d. h. sperrschichtfrei ist. Der Erfindung gelingt es beide Bedingungen auf überraschend einfache Weise zu erfüllen.

Der erfindungsgemäße Miniaturkaltleiter wird bei ca. 700°C in Glas eingeschmolzen. Die üblichen Lötverbindungen halten derartigen Temperaturen nicht Stand. Die Stromzuführungen werden deshalb mittels Widerstandsschweißen mit Metallbelegungen des Kaltleiters verbunden. Dies ist jedoch nicht möglich bei den aus drei Schichten bestehenden Metallbelegungen des Kaltleiters des bekannten Niveaufühlers. Üblicherweise werden bei diesem nacheinander eine jeweils etwa 1µm dicke Schicht aus Chrom, Nickel und schließlich Silber auf die zu kontaktierende Oberflächen des Kaltleiters aufgedampft. Diese Schichten sind aber für einen Schweißvorgang viel zu dünn und brennen bei der hohen Schweißtemperatur bis zu 90% ab. Die Dicken der Schichten können auch nicht einfach wesentlich verstärkt werden, da die verschiedenen Metalle einen jeweils unterschiedlichen Wärmeausdehnungskoeffizienten besitzen, der unter Schweißbedingungen zum Abblättern der Schichten bzw. zum Bruch der gesamten Metallbelegung führt. Andererseits kann aber nicht jede schweißfähige Oberfläche als kaltleiterverträgliche Metallbelegung verwendet werden.

Es hat sich daher als besonders vorteilhaft erwiesen, wenn in weiterer Verbesserung das Gegenstandes nach der Erfindung eine ca. 50µm dik-ke Aluminium-Belegung mittels des Siebdruckverfahrens auf die zu kontaktierenden Oberflächen des Kaltleiters aufgebracht wird. Eine derartige Aluminium-Siebdruckmetallisierung ist einerseits schweißbar und andererseits sperrschichtfrei. Die Dicke der Aluminiumschicht ist groß genug gewählt, damit bei einer Schweißtemperatur von ca. 900°C die Metallbelegung zwar wie gewünscht aufschmilzt, jedoch nicht zu sehr abbrennt.

Die durch die Erfindung erzielte Verbesserung wird nachstehend anhand eines Diagramms näher erläutert, das den Verlauf der Strom-Spannungs-Kennlinie eines Kaltleiters bei dem bekannten und bei einem Niveaufühler nach der Erfindung, jeweils in Luft und in Flüssigkeit wiedergibt

Das Diagramm zeigt - als durchgezogene Linien - die Kennlinien eines bekannten Niveaufühlers, wobei die untere Kennlinie auf den nicht eingetauchten Zustand (Luft, - 25°C) bezogen ist, während die darüber verlaufende Kurve mit deutlich höherem Stromverbrauch die Kennlinie des Niveaufühlers in eingetauchtem Zustand (Öl, + 50°C) wiedergibt. Die Stromdifferenz bei der hier gewählten Betriebsspannung von ca. 18V definiert das durch einen nachgeschalteten Verstärker auswertbare Signalverhältnis.

Das Diagramm zeigt außerdem die gestrichelt gezeichneten Kennlinien eines direkt in Glas eingeschmolzenen Kaltleiters, wobei zu erkennen ist, daß das Signalverhältnis etwa zweimal größer als bei dem bekannten Niveaufühler ist. Der wesentlich verbesserte Signalhub liefert auch noch bei Flüssigkeitstemperaturen um 100° C ein ausreichendes Nutzsignal.

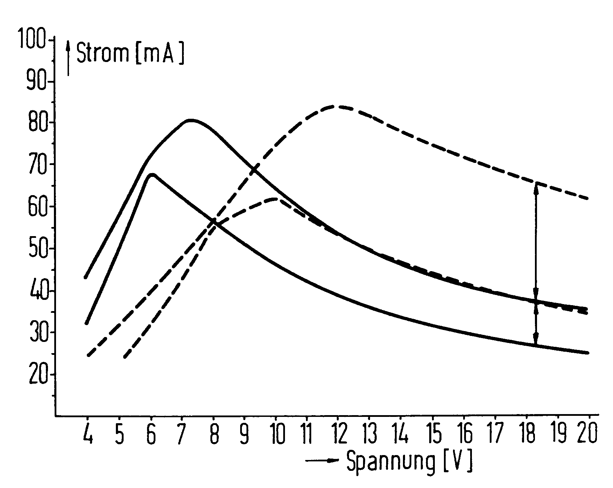

## Patentansprüche

1. Verfahren zur Herstellung eines als Niveaufühler für chemisch aggressive Flüssigkeiten dienenden Kaltleiters, bei dem Metallbelegungen aus Aluminium durch Siebdruck auf zu kontaktierende Kaltleiterflächen aufgebracht werden, Stromzuführungen an die Metallbelegungen angeschweißt werden und der Kaltleiter mit den Metallbelegungen und den Verbindungsstellen zwischen diesen und den Stromzuführungen bei einer Temperatur von etwa 700°C in Glas eingeschmolzen wird.

2. Verfahren nach Anspruch 1, **dadurch gekennzeichnet**, daß die Aluminium-Metallbelegungen in einer Dicke von etwa 50 µm aufgebracht werden.

## Claims

1. Method for producing a PTC thermistor serving as a level sensor for chemically aggressive liquids, in which metal coatings of aluminium are applied by screen printing to PTC thermistor surfaces to be contacted, supply leads are welded to the metal coatings and the PTC thermistor, together with the metal coatings and the connection points between these and the supply leads, is sealed in glass at a temperature of approximately 700° C.

2. Method according to Claim 1, characterized in that the aluminium metal coatings are applied at a thickness of approximately 50 $\mu$m.

**Revendications**

1. Procédé de fabrication d'une thermistance à coefficient positif de température servant de capteur de niveau pour des liquides corrosifs du point de vue chimique, qui consiste à déposer des revêtements métalliques en aluminium par sérigraphie sur des surfaces de la thermistance, avec lesquelles un contact doit être établi, à fixer par soudage des éléments d'alimentation en courant aux revêtements métalliques et à incorporer à du verre par fusion à une température d'environ 700° C la thermistance ayant les revêtements métalliques et les zones de jonction entre ces revêtements et les éléments d'alimentation en courant,.

2. Procédé selon la revendication 1, caractérisé en ce qu'on dépose les revêtements métalliques en aluminium, en une épaisseur d'environ 50 mm.